# FASCICULE DE BREVET EUROPEEN

(11) **EP 2 523 290 B1**
(45) Date de publication et mention de la délivrance du brevet: **04.07.2018**
(21) Numéro de dépôt: 12165707.6
(22) Date de dépôt: 26.04.2012
(51) Int. Cl.: H02G 15/34

(54) **Unité de terminaison pour câble supraconducteur multiphase**
Abschlusseinheit für Multiphasen-Supraleiterkabel
Termination unit for multiphase superconducting cable

(30) Priorité: 11.05.2011 FR 1154077
(43) Date de publication de la demande: 14.11.2012
(73) Titulaire: Nexans, 92400 Courbevoie (FR)
(72) Inventeur: Lallouet, Nicolas, 62132 FIENNES (FR)
(74) Mandataire: Lenne, Laurence

(56) Documents cités:
- EP-A1- 1 732 190
- EP-A2- 1 453 142
- WO-A1-03/103094
- WO-A2-2008/113366
- DE-A1-102004 034 494
- GOUGE M J ET AL: "High-temperature superconducting tri-axial power cable", PHYSICA C, NORTH-HOLLAND PUBLISHING, AMSTERDAM, NL, vol. 392-396, 1 octobre 2003 (2003-10-01), pages 1180-1185, XP004455073, ISSN: 0921-4534, DOI: 10.1016/S0921-4534(03)00788-3

## Description

L'invention concerne une unité de terminaison pour câble supraconducteur multiphasé, pour moyenne ou haute tension.

Un câble supraconducteur multiphasé, en général triphasé, peut comprendre, autour d'un axe longitudinal et à l'intérieur d'une enveloppe thermique contenant un fluide réfrigérant, un noyau central support qui peut être tubulaire et contenir également un fluide réfrigérant et sur lequel sont disposées de façon concentrique des couches supraconductrices de la phase n°1 à la phase n°N et finalement une couche d'écran d'un conducteur neutre. Entre chaque couche supraconductrice est disposée une couche diélectrique.

Le document de brevet WO 2008/113366 décrit une unité de terminaison pour un tel câble supraconducteur.

Cette terminaison comporte pour chaque phase un élément modulaire comprenant une enveloppe externe d'isolation thermique contenant un tronçon de câble supraconducteur contenu dans une enveloppe interne contenant du fluide réfrigérant et pourvue d'un tronçon d'isolateur perpendiculaire contenant un élément de dérivation de la phase correspondante du câble se terminant par un élément de connexion électrique et destiné à la gestion du champ électrique. Le document Gouge et al, "High-temperature superconducting tri-axial power cable", PHYSICA C, NORTH-HOLLAND PUBLISHING, AMSTERDAM, NL, vol. 392-396, 1 octobre 2003, pages 1180-1185 décrit une unité de terminaison pour câble supraconducteur multiphasé comportant l'ensemble des caractéristiques du préambule de la revendication 1. Le but de l'invention est de proposer une unité de terminaison pour câble supraconducteur multiphasé qui soit de constitution particulièrement plus simple et moins encombrante.

Pour ce faire, l'invention propose une unité de terminaison pour câble supraconducteur multiphasé comportant l'ensemble des caractéristiques de la revendication 1. Selon l'invention, ledit élément de dérivation est constitué d'un plateau conducteur électrique porté mécaniquement par lesdites enveloppes adjacentes et comportant une bague interne raccordée électriquement à la phase correspondant dudit câble et portée par lesdites enveloppes internes adjacentes.

Avantageusement, ladite bague interne est pourvue d'orifice de passage dudit fluide réfrigérant. Ladite bague interne est pourvue à sa périphérie d'éléments conducteurs électriques déformables qui la connecte électriquement à une bague externe portant ledit élément de connexion électrique.

Lesdits éléments conducteurs électriques déformables peuvent être des lamelles multi-contacts.

Et ladite bague externe peut comporter des fentes traversantes destinées à former des chicanes de conduction thermique.

Lesdits éléments conducteurs électriques déformables peuvent être des lames radiales de liaison mécanique de ladite bague interne et de ladite bague externe.

Lesdits éléments conducteurs électriques déformables peuvent également être des tresses, par exemple en cuivre, reliant ladite bague interne et ladite bague externe.

Avantageusement, ladite bague interne est constituée de deux bagues concentriques connectées par des lamelles multi-contacts.

Ladite enveloppe interne est de préférence en matériau isolant thermique et avantageusement une mousse isolante thermique est disposée entre lesdites enveloppes internes et externes.

L'invention est décrite ci-après plus en détail à l'aide de figures ne représentant que des modes de réalisation préférés de l'invention.
La figure 1 est une vue en perspective d'une unité de terminaison conforme à l'invention.
La figure 2 est une vue en perspective et en coupe longitudinale d'une unité de terminaison conforme à l'invention
La figure 3 est une vue de détail en perspective et en coupe longitudinale d'une unité de terminaison conforme à l'invention.
La figure 4 est une vue en coupe transversale d'une unité de terminaison conforme à l'invention, selon le plan IV-IV.
La figure 5 est une vue de détail en perspective conforme à un autre mode de réalisation de l'invention.

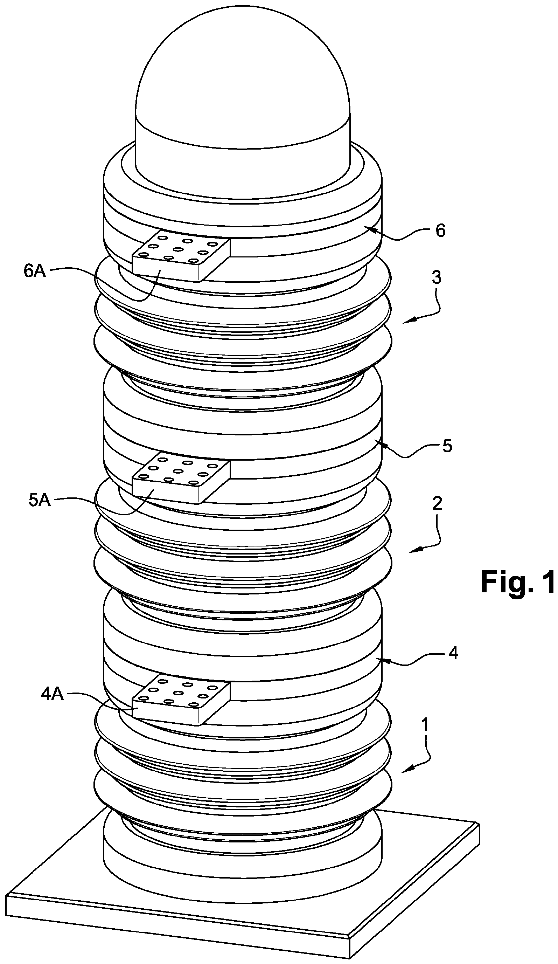

Comme représenté sur la figure 1, une unité de terminaison pour câble supraconducteur multiphasé comporte pour chaque phase un élément modulaire cylindrique 1, 2, 3, comprenant une enveloppe externe d'isolation thermique en matériau diélectrique, par exemple en époxy renforcé de fibres avec des ailettes en silicone et pourvue d'une bride d'extrémité métallique, par exemple en aluminium, cette enveloppe contenant un tronçon de câble supraconducteur contenu dans une enveloppe interne constitué d'un matériau diélectrique contenant un fluide réfrigérant.

Un élément de dérivation de chaque phase 4, 5, 6 pourvu d'un élément de connexion électrique 4A, 5A, 6A, de type cosse, est disposé à l'extrémité de chaque élément modulaire 1, 2, 3, seul cet élément de connexion électrique 4A, 5A, 6A faisant saillie des éléments modulaires 1, 2, 3.

Eléments modulaires et éléments de dérivation peuvent être superposés comme illustré sur la figure 1 et la terminaison peut être verticale ou éléments modulaires et éléments de dérivation peuvent être juxtaposés l'un à côté de l'autre et la terminaison peut être horizontale.

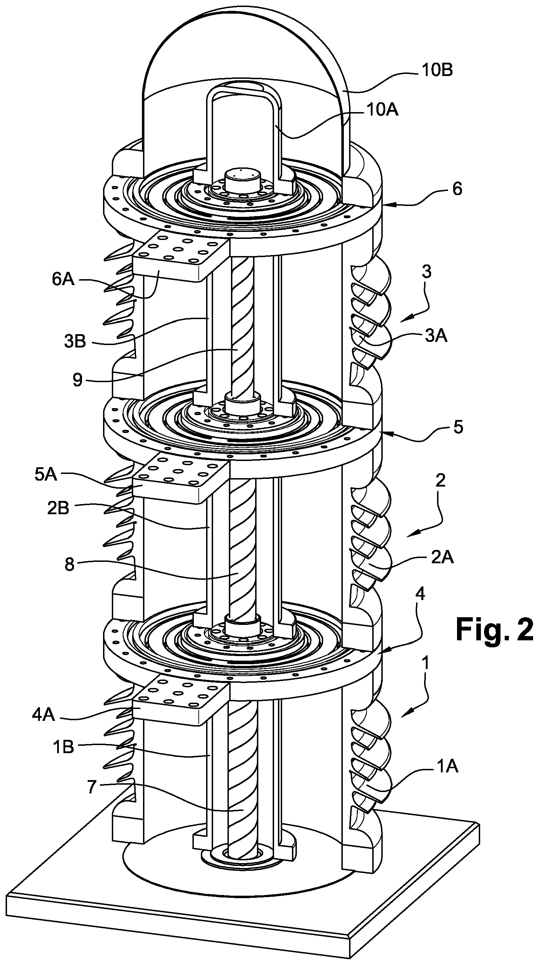

Comme visible sur la figure 2, chaque élément modulaire cylindrique 1, 2, 3 comprend donc une enveloppe externe d'isolation thermique 1A, 2A, 3A contenant un tronçon de câble supraconducteur 7, 8, 9 contenu dans une enveloppe interne 1B, 2B, 3B contenant un fluide réfrigérant, par exemple de l'azote liquide.

Les enveloppes internes 1B, 2B, 3B sont en matériau diélectrique et de préférence en matériau isolant thermique, de préférence en polymère, par exemple en laminé de tissu de verre continu dans une résine époxy, connu sous l'appellation « G10 », et une mousse isolante thermique peut être disposée entre les enveloppes internes 1B, 2B, 3B et externes 1A, 2A, 3A, par exemple de la mousse de verre ou de polyisocianurate expansé.

L'élément de dérivation supérieur 6 correspondant à la troisième phase est surmonté par un capot interne 10A contenant le fluide réfrigérant et par un capot externe 10B, qui peuvent être métalliques par exemple en aluminium.

Chaque élément de dérivation 4, 5, 6 est directement connecté électriquement au tronçon de câble correspondant 7, 8, 9.

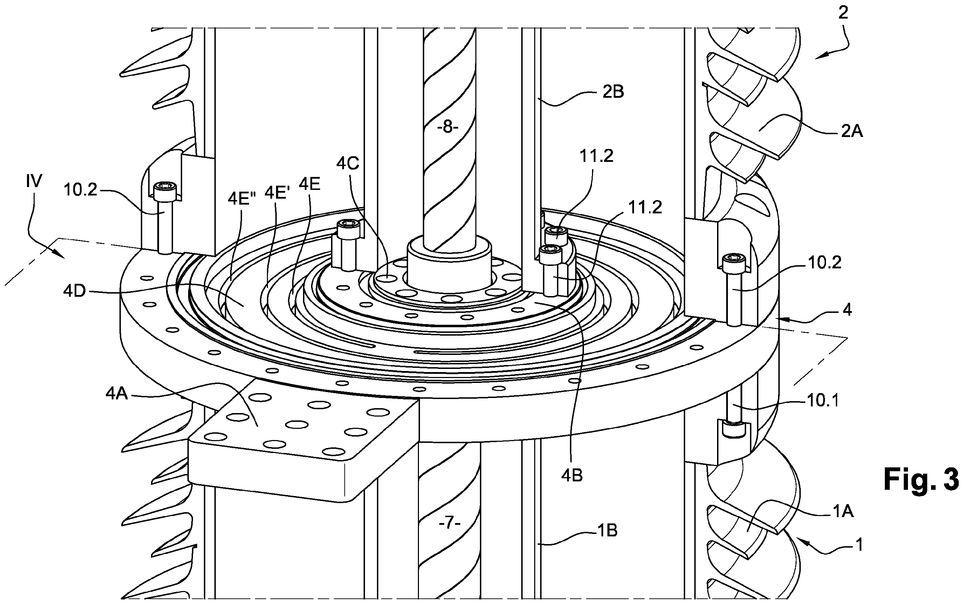

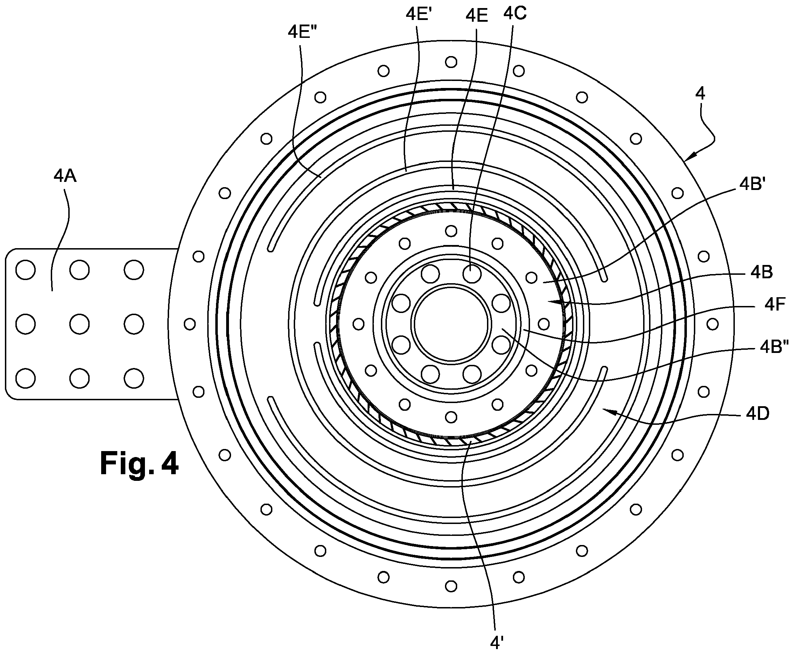

Selon le mode de réalisation illustré sur les figures 2, 3 et 4, et particulièrement visible sur les figures 3 et 4, chaque élément de dérivation, par exemple 4, est constitué d'un plateau conducteur électrique, par exemple en cuivre ou en aluminium, porté mécaniquement par les enveloppes adjacentes externes 1A, 2A des éléments modulaires adjacents, au moyen de vis 10.1, 10.2 traversant une bride correspondante des enveloppes ainsi que le plateau, et par les enveloppes adjacentes internes 1B, 2B des éléments modulaires adjacents au moyen de vis 11.1, 11.2 traversant une bride correspondante des enveloppes ainsi que le plateau.

Chaque élément de dérivation, par exemple 4, comporte une bague interne centrale 4B raccordée électriquement directement à la phase correspondante du câble, par exemple au moyen de multi-contacts, et portée par les enveloppes internes adjacentes 1B, 2B des éléments modulaires adjacents. Cette bague interne 4B est pourvue d'orifices de passage 4C du fluide réfrigérant.

Cette bague interne 4B est pourvue à sa périphérie d'éléments conducteurs électriques déformables, qui sont des lamelles multi-contacts 4' selon ce mode de réalisation, et qui la connecte électriquement à une bague externe 4D périphérique portant l'élément de connexion électrique 4A. Ces éléments déformables permettent d'assurer la conduction électrique tout en absorbant les déformations de contraction engendrées par la température du fluide réfrigérant.

Cette bague externe 4D comporte des fentes traversantes 4E, 4E' et 4E"destinées à former des chicanes de conduction thermique, afin de minimiser la conduction thermique entre l'extérieur et l'intérieur.

Pour des raisons de montage mécanique, la bague interne 4B est de préférence elle-même constituée de deux bagues concentriques 4B' et 4B" connectées par des lamelles multi-contacts 4F.

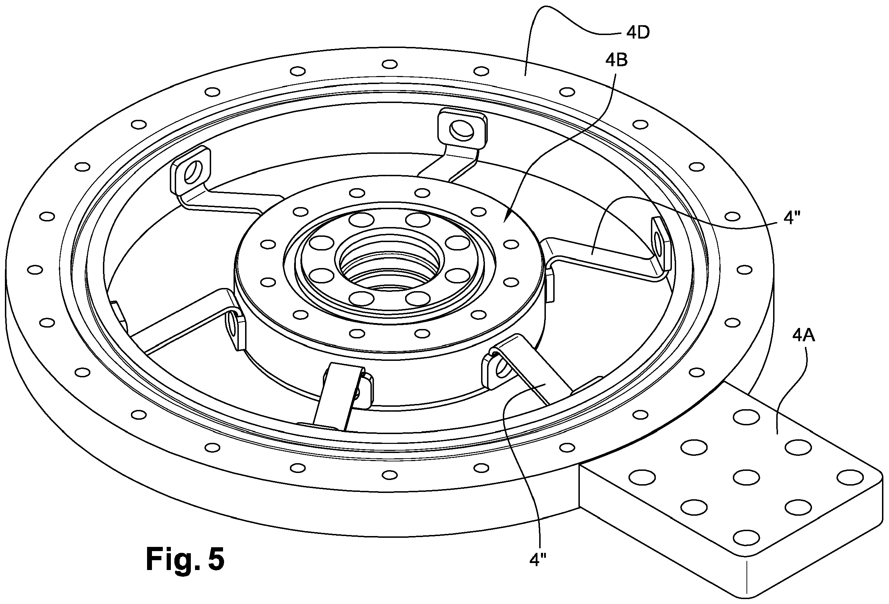

La figure 5 représente un autre mode de réalisation où les éléments conducteurs électriques déformables entre la bague interne 4B et la bague externe 4D sont différents.

Ces éléments conducteurs électriques déformables sont des éléments flexibles 4" radiaux reliant ladite bague interne et ladite bague externe.

Selon l'exemple représenté, ces éléments flexibles sont des lames radiales reliant la bague interne 4B et de la bague externe 4D, de préférence vissées sur les bagues 4B et 4D. Ces lames sont métalliques, par exemple en aluminium, en cuivre ou en laiton et peuvent être remplacées par des tresses conductrices.

Grâce à leur faible épaisseur et leur propre flexibilité, ces lames 4" assurent la conduction électrique tout en absorbant les déformations de contraction engendrées par la température du fluide réfrigérant.

Elles assurent également une minimisation de la conduction thermique entre l'extérieur et l'intérieur grâce aux espaces les séparant et de ce fait, dans ce cas, la bague externe 4D est constituée d'un simple anneau.

Bien que non représentés sur les figures, les brides d'interface entre éléments modulaires et éléments de dérivation et pourvues des vis 10.1, 10.2, 11.1 et 11.2 sont pourvus de joints d'étanchéité.

## Revendications

1. Unité de terminaison pour câble supraconducteur multiphasé comportant pour chaque phase un élément modulaire cylindrique (1, 2, 3) comprenant une enveloppe externe (1A, 2A, 3A) d'isolation thermique et un tronçon de câble supraconducteur (7, 8, 9) contenu dans ladite enveloppe externe, ladite unité comportant également un élément de dérivation (4, 5, 6) de chaque phase pourvu d'un élément de connexion électrique (4A, 5A, 6A) disposé à l'extrémité de chaque dit élément modulaire, chaque dit élément de dérivation (4, 5, 6) étant directement connecté audit tronçon de câble correspondant (7, 8, 9) et seul ledit élément de connexion électrique (4A, 5A, 6A) faisant saillie desdits éléments modulaires (1, 2, 3), unité comprenant également une enveloppe interne (1B, 2B, 3B) contenant un fluide réfrigérant et contenant ledit tronçon de câble, unité **caractérisée en ce que** chaque dit élément de dérivation (4) est constitué d'un plateau conducteur électrique porté mécaniquement par lesdites enveloppes adjacentes (1A, 2A, 1B, 2B) et comportant une bague interne (4B) raccordée électriquement à la phase correspondant dudit câble et portée par lesdites enveloppes internes adjacentes (1B, 2B) et **en ce que** ladite bague interne (4B) est pourvue à sa périphérie d'éléments conducteurs électriques déformables (4', 4") qui la connecte électriquement à une bague externe (4D) portant ledit élément de connexion électrique (4A).

2. Unité selon la revendication précédente, **caractérisée en ce que** ladite bague interne (4B) est pourvue d'orifice de passage (4C) dudit fluide réfrigérant.

3. Unité selon la revendication 1 ou 2, **caractérisée en ce que** lesdits éléments conducteurs électriques déformables sont des lamelles multi-contacts (4').

4. Unité selon l'une des revendications précédentes, **caractérisée en ce que** ladite bague externe comporte des fentes traversantes (4E, 4E', 4E") destinées à former des chicanes de conduction thermique.

5. Unité selon la revendication 1, **caractérisée en ce que** lesdits éléments conducteurs électriques déformables sont des éléments flexibles radiaux (4") reliant ladite bague interne (4B) et ladite bague externe (4D).

6. Unité selon l'une des revendications précédentes, **caractérisée en ce que** ladite bague interne (4B) est constituée de deux bagues concentriques (4B', 4B") connectées par des lamelles multi-contacts.

7. Unité selon l'une des revendications précédentes, **caractérisée en ce que** ladite enveloppe interne (1B, 2B, 3B) est en matériau isolant thermique.

8. Unité selon l'une des revendications précédentes, **caractérisée en ce qu'**une mousse isolante thermique est disposée entre lesdites enveloppes internes et externes (1A, 2A, 3A, 1B, 2B, 3B).

## Patentansprüche

1. Abschlusseinheit für Multiphasen-Supraleiterkabel, umfassend, für jede Phase, ein zylindrisches modulares Element (1, 2, 3), umfassend eine externe Umhüllung (1A, 2A, 3A) zur thermischen Isolierung und einen Supraleitkabelabschnitt (7, 8, 9), der in der externen Umhüllung enthalten ist, wobei die Einheit auch ein Element zur Ableitung (4, 5, 6) jeder Phase umfasst, versehen mit einem elektrischen Verbindungselement (4A, 5A, 6A), das am Ende jedes der modularen Elemente angeordnet ist, wobei jedes der Elemente zur Ableitung (4, 5, 6) direkt mit dem entsprechenden Kabelabschnitt (7, 8, 9) verbunden ist, und nur das elektrische Verbindungselement (4A, 5A, 6A), von den modularen Elementen (1, 2, 3) vorspringt, wobei die Einheit auch eine interne Umhüllung (1B, 2B, 3B) umfasst, die ein Kühlfluid enthält und den Kabelabschnitt enthält, Einheit, die **dadurch gekennzeichnet ist, dass** das Ableitungselement (4) aus einer elektrisch leitenden Platte besteht, die mechanisch von den benachbarten Umhüllungen (1A, 2A, 1B, 2B) getragen wird und umfassend einen internen Ring (4B), der elektrisch mit der entsprechenden Phase des Kabels verbunden ist und von den benachbarten internen Umhüllungen (1B, 2B) getragen ist, und dadurch, dass der interne Ring (4B) an seinem Umfang mit verformbaren elektrischen leitenden Elementen (4', 4") versehen sind, die ihn elektrisch mit einem externen Ring (4D) verbinden, der das elektrische Verbindungselement (4A) trägt.

2. Einheit nach dem vorhergehenden Anspruch, **dadurch gekennzeichnet, dass** der interne Ring (4B) mit einer Öffnung zum Durchgang (4C) des Kühlfluids versehen ist.

3. Einheit nach Anspruch 1 oder 2, **dadurch gekennzeichnet, dass** die verformbaren elektrisch leitenden Elemente Multikontaktlamellen (4') sind.

4. Einheit nach einem der vorhergehenden Ansprüche, **dadurch gekennzeichnet, dass** der externe Ring querende Schlitze (4E, 4E', 4E") aufweist, die ausgelegt sind, um thermische Leitbleche zu bilden.

5. Einheit nach Anspruch 1, **dadurch gekennzeichnet, dass** die verformbaren elektrisch leitenden Elemente radiale flexible Elemente (4") sind, die den internen Ring (4B) und den externen Ring (4D) verbinden.

6. Einheit nach einem der vorhergehenden Ansprüche, **dadurch gekennzeichnet, dass** der interne Ring (4B) aus zwei konzentrischen Ringen (4B', 4B") besteht, die durch Multikontaktlamellen verbunden sind.

7. Einheit nach einem der vorhergehenden Ansprüche, **dadurch gekennzeichnet, dass** die interne Umhüllung (1B, 2B, 3B) aus thermisch isolierendem Material ist.

8. Einheit nach einem der vorhergehenden Ansprüche, **dadurch gekennzeichnet, dass** ein thermisch isolierender Schaum zwischen den internen und externen Umhüllungen (1A, 2A, 3A, 1B, 2B, 3B) angeordnet ist.

## Claims

1. A termination unit for a multiphase superconducting cable having, for each phase, a cylindrical modular element (1, 2, 3) comprising a thermally insulating outer enclosure (1A, 2A, 3A) and a superconducting cable segment (7, 8, 9) contained in said outer enclosure, said unit also including a bypass element (4, 5, 6) for each phase provided with an electrical connecting element (4A, 5A, 6A) arranged at the end of each said modular element, each said bypass element (4, 5, 6) being directly connected to said corresponding cable segment (7, 8, 9) and only said electrical connecting element (4A, 5A, 6A) protruding from said modular elements (1, 2, 3), said unit also comprising an inner enclosure (1B, 2B, 3B) containing a coolant and containing said cable segment, said unit being **characterized in that** each said bypass element (4) is made up of an electrically conductive plate mechanically supported by said adjacent enclosures (1A, 2A, 1B, 2B) and including an inner ring (4B) electrically connected to the corresponding phase of said cable and supported by said adjacent inner enclosures (1B, 2B) and **in that** said inner ring (4B) is provided at its periphery with deformable electrical conducting elements (4', 4") that electrically connect it to an outer ring (4D) supporting said electrically connecting element (4A).

2. The unit according to the preceding claim, **characterized in that** said inner ring (4B) is provided with a passage orifice (4C) for said coolant.

3. The unit according to claim 1 or 2, **characterized in that** said deformable electrical conductive elements are multi-contact strips (4').

4. The unit according to one of the preceding claims, **characterized in that** said outer ring includes through slits (4E, 4E', 4E") intended to form thermally conducting baffles.

5. The unit according to claim 1, **characterized in that** said deformable electrical conducting elements are radial flexible elements (4") connecting said inner ring (4B) and said outer ring (4D).

6. The unit according to one of the preceding claims, **characterized in that** said inner ring (4B) is made up of two concentric rings (4B', 4B") connected by multi-contact strips.

7. The unit according to one of the preceding claims, **characterized in that** said inner enclosure (1B, 2B, 3B) is made from a thermally insulating material.

8. The unit according to one of the preceding claims, **characterized in that** a thermally insulating foam is arranged between said inner and outer enclosures (1A, 2A, 3A, 1B, 2B, 3B).
